Europäisches Patentamt

**European Patent Office**

**Office européen des brevets**

(19)

(11) Numéro de publication : **0 292 368 B1**

# FASCICULE DE BREVET EUROPEEN

(12)

(45) Date de publication du fascicule du brevet :
**15.01.92 Bulletin 92/03**

(51) Int. Cl.$^5$ : **G05B 19/04**

(21) Numéro de dépôt : **88401165.1**

(22) Date de dépôt : **11.05.88**

(54) **Dispositif électronique formant interface bidirectionnelle de commande d'un élément de puissance de commutation d'une charge.**

(30) Priorité : **19.05.87 FR 8706993**

(43) Date de publication de la demande :
**23.11.88 Bulletin 88/47**

(45) Mention de la délivrance du brevet :
**15.01.92 Bulletin 92/03**

(84) Etats contractants désignés :
**DE GB IT**

(56) Documents cités :
**GB-A- 2 135 799**
**GB-A- 2 159 982**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Coustre, André**
**7 bis rue de la Forêt Chanteloup les Vignes**
**F-78570 Andresy (FR)**

(74) Mandataire : **Berger, Helmut et al**
**Cabinet Z. WEINSTEIN 20, avenue de**
**Friedland**
**F-75008 Paris (FR)**

## Description

La présente invention concerne un dispositif électronique formant interface bidirectionnelle de commande d'un élément de puissance de commutation d'une charge, telle que par exemple lampe à filament, électrovanne, moteur.

On connaît de tels dispositifs électroniques montés notamment sur des véhicules automobiles et reliés à des entrées/sorties d'une unité centrale constituée par exemple par un microprocesseur pour commander l'élément de puissance et signaler et diagnostiquer des défauts de fonctionnement des éléments extérieurs formés chacun par la charge.

Cependant, ces dispositifs connus nécessitent une liaison avec l'unité centrale de traitement pour véhiculer le signal de commande de l'élément de puissance et une autre liaison différente pour transmettre à l'unité centrale le signal d'information relative à un défaut de fonctionnement notamment de la charge. Dans le cas de plusieurs éléments de puissance à commander il est nécessaire d'utiliser un grand nombre correspondant d'entrées/sorties du microprocesseur et donc d'augmenter la taille de celui-ci. Il est possible de réduire le nombre de liaisons relatives à la transmission des signaux d'information de défaut en regroupant ces signaux. Cependant, par ce groupement, les éléments défectueux ne peuvent pas être différenciés les uns des autres à moins d'utiliser un circuit bidirectionnel supplémentaire.

La conception des systèmes connus oblige donc à utiliser soit davantage d'entrées/sorties du microprocesseur, soit un circuit intégré supplémentaire, d'où une augmentation sensible des coûts.

La présente invention a pour but d'éliminer les inconvénients ci-dessus en proposant un dispositif électronique formant interface permettant une réduction importante du nombre d'entrées/sorties du microprocesseur tout en assurant les fonctions de commande de chaque charge et de diagnostique de l'état de celle-ci et de protéger en outre l'élément de puissance par une limitation automatique du courant le traversant.

Pour cela, le dispositif électronique formant interface bidirectionnelle de commande d'un élément de puissance de commutation d'une charge à partir d'une unité centrale de commande telle que par exemple un microprocesseur est caractérisé en ce qu'il comprend un circuit logique relié à une entrée et sortie de l'unité centrale par une seule et unique liaison filaire et comprenant une bascule bistable, dont une entrée de commande est reliée à la liaison filaire et mémorisant à sa sortie un signal de commande de conduction de l'élément de puissance provenant de l'unité centrale en mode sortie, le signal de sortie de la bascule étant réappliqué à l'entrée de commande de la bascule pour informer l'unité centrale en mode d'entrée du fonctionnement normal de la charge.

Selon une caractéristique de l'invention, le dispositif comprend de plus un circuit de contrôle des conditions de fonctionnement de la charge produisant à une autre entrée de commande de la bascule un signal forçant la sortie de la bascule à changer d'état lors d'une anomalie de fonctionnement de la charge détectée par le circuit de contrôle.

Selon encore une autre caractéristique de l'invention, le dispositif comprend en outre un circuit de limitation automatique de courant dans l'élément de puissance et comprenant un amplificateur différentiel dont une entrée est reliée à la liaison filaire et un comparateur ayant sa sortie reliée à l'autre entrée de l'amplificateur différentiel et comparant à ses deux entrées la valeur du courant circulant à travers l'élément de puissance à une valeur supérieure de référence.

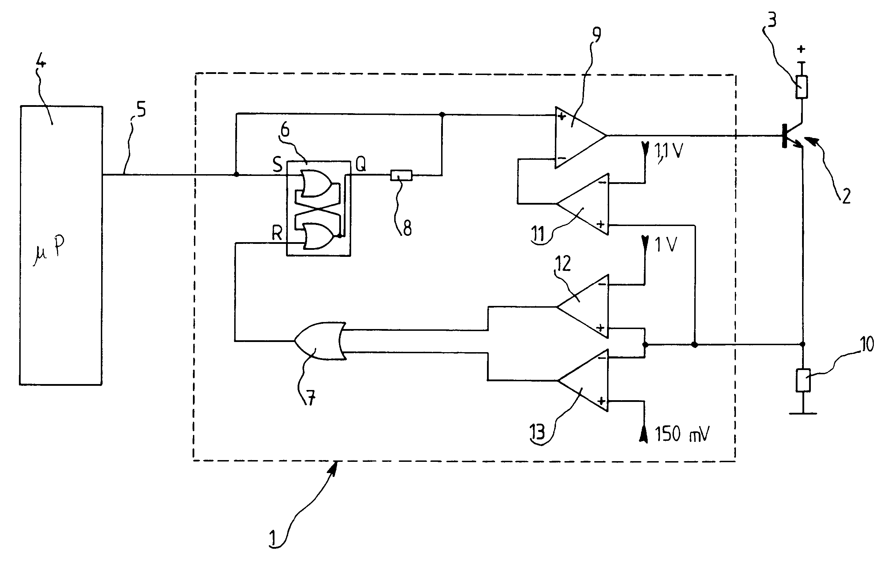

L'invention sera mieux comprise, et d'autres buts, caractéristiques, détails et avantages de celle-ci apparaîtront plus clairement au cours de la description explicative qui va suivre faite en référence à la figure unique annexée donnée uniquement à titre d'exemple illustrant un mode de réalisation de l'invention, et laquelle représente le schéma électronique du dispositif formant interface bidirectionnelle de l'invention.

En se reportant à la figure, la référence 1 désigne le dispositif électronique formant interface bidirectionnelle de commande d'un élément de puissance 2 formé dans le cas présent par un transistor de puissance pour commuter ou mettre en service une charge 3 telle que par exemple une lampe à filament, une électrovanne ou un moteur.

Le dispositif formant interface 1 est relié à une borne d'entrée/sortie d'une unité centrale de commande et de traitement 4, constituée par un microprocesseur, par l'intermédiaire d'une seule et unique ligne ou liaison filaire 5 sur laquelle sont transmis les signaux de commande du transistor de puissance 2 ainsi que les signaux d'information de l'état de la charge 3, comme il sera expliqué ultérieurement.

Le dispositif formant interface 1 comprend une bascule bistable 6 du type RS, dont l'entrée de commande S est reliée à la ligne 5 et l'entrée de commande R est reliée à la sortie d'une porte logique OU 7. La sortie Q de la bascule 6 est reliée par l'intermédiaire d'une résistance 8 à l'entrée positive d'un amplificateur différentiel 9, dont la sortie est reliée à la base du transistor de puissance 2. La sortie Q de la bascule 6 est également reliée à l'entrée de commande S par l'intermédiaire de la résistance 8. L'émetteur du transistor de puissance 2 est relié à la masse par l'intermédiaire d'une résistance 10 tandis que le collecteur est relié à la charge 3. La jonction commune entre l'émetteur du transistor 2 et la résistance 10 est reliée à l'entrée positive d'un comparateur 11, dont l'entrée négative reçoit une tension de référence, par exemple de 1,1 volt. La sortie du comparateur 11 est reliée à l'entrée négative de l'amplificateur différentiel 9. La jonction commune entre l'émetteur du transistor 2 et la résistance 10 est également reliée aux bornes positive et négative respectivement de deux autres comparateurs 12 et 13, dont les deux sorties sont reliées respectivement aux deux entrées de la porte OU 7. La borne négative du comparateur 12 reçoit une tension de référence supérieure, par exemple de 1 volt, tandis que la borne positive du comparateur 13 reçoit une tension de référence inférieure, par exemple de 150 millivolts.

L'unité centrale à microprocesseur 4 est programmée de façon à définir sur la ligne filaire 5, trois états logiques à savoir un état logique "1" forçant la mise en conduction du transistor de puissance 2, un état logique "O" forçant le blocage du transistor 2 et un état logique "Z", état haute impédance de l'unité centrale 4, permettant de restituer l'état de la charge 3 et de renvoyer sur la ligne 5 un niveau logique "1" signalant un fonctionnement correct ou normal de la charge, tout en mémorisant la mise en conduction, ou un niveau logique "O" signalant un défaut de fonctionnement de la charge (par exemple en circuit ouvert ou en court-circuit), tout en arrêtant la conduction du transistor de puissance 2.

Le fonctionnement du dispositif formant interface 1 de l'invention ressort déjà de la description qui en a été faite ci-dessus et va être maintenant expliqué.

Lors de la mise sous tension de l'ensemble représenté à la figure, dans la mesure où aucune tension n'est présente à l'entrée négative du comparateur 13, ce dernier produit à sa sortie un signal de niveau haut appliqué à l'entrée R de la bascule 6 par l'intermédiaire de la porte OU 7. La sortie Q de la bascule 6 se trouve donc à l'état bas ou "O". En passant en mode sortie, l'unité centrale 4 applique un signal d'état logique "1" à l'entrée de commande S de la bascule 6 et à l'entrée positive de l'amplificateur différentiel 9, dont la sortie commande la conduction du transistor de puissance 2, qui assure en conséquence la mise en service de la charge 3. Un courant circule ainsi dans le trajet collecteur-émetteur du transistor 2 et la tension apparaissant à l'entrée négative du comparateur 13 dépasse la tension inférieure de référence de façon que la sortie du comparateur 13 passe à un niveau bas. L'entrée de commande R passe donc au niveau "O". La bascule recevant à son entrée S un signal de niveau "1", sa sortie Q passe à l'état "1", état qui est mémorisé comme cela est connu pour ce type de bascule. Dans les conditions normales de fonctionnement, la tension produite à la jonction commune entre l'émetteur du transistor 2 et la résistance 10 est comprise entre les tensions de référence supérieure et inférieure des comparateurs 12 et 13 de sorte que l'état de la bascule 6 reste inchangé, en particulier sa sortie Q est maintenue au niveau haut de mise en conduction du transistor de puissance 2 et donc de mise en service de la charge 3. L'unité centrale 4, en passant à l'état haute impédance, reçoit donc à sa borne d'entrée/sortie reliée à la ligne 5 un signal de niveau haut, l'informant d'un fonctionnement normal ou correct de la charge 3. Si la charge 3 doit être mise hors service, l'unité centrale 4 émet sur la ligne 5 un signal de commande d'un niveau bas, qui est en fait un signal inverse du signal de commande de niveau haut, bloquant le transistor de puissance 2.

Le circuit de contrôle formé par les deux comparateurs 12 et 13 permet de déceler toute anomalie de fonctionnement de la charge 3.

Ainsi, dans le cas d'un court-circuit dans la charge 3, la tension produite à la jonction commune de l'émetteur du transistor 2 et de la résistance 10 va dépasser la tension supérieure de référence du comparateur 12 l'amenant à produire à sa sortie un signal de niveau haut appliqué à l'entrée R, prioritaire, de la bascule 6 par l'intermédiaire de la porte 7. La sortie Q de la bascule 6 va alors passer à un signal de niveau bas ou état "O", état qui peut être vérifié par l'unité centrale 4 en mode d'entrée. Bien entendu, ce changement d'état de la sortie Q de la bascule 6 produit un blocage du transistor de puissance 2.

Dans le cas où la charge 3 se trouve en circuit ouvert, la tension à la jonction commune entre l'émetteur du transistor 2 et la résistance 10 devient inférieure à la tension de référence du comparateur 13 qui délivre à sa sortie un signal de niveau haut amenant la sortie Q de la bascule 6 à passer de l'état haut à l'état bas, ce dernier étant alors vérifié par l'unité centrale 4 en mode entrée. Comme précédemment, le transistor 2 se trouve bloqué par ce changement d'état.

Les comparateurs 12 et 13 permettent donc de contrôler la valeur du courant nominal de fonctionnement de la charge et de forcer la sortie de la bascule 6 à changer d'état lorsque la valeur du courant dans la charge est inférieure ou supérieure à une valeur de référence prédéterminée lors d'une anomalie de fonctionnement de la charge.

L'amplificateur différentiel 9 en recevant d'une part le signal de niveau haut provenant de l'unité centrale 4 et de la sortie Q de la bascule 6 et, d'autre part, le signal de sortie du comparateur 11, permet de commander le transistor de puissance 2 tout en limitant le courant dans celui-ci à une valeur telle que la tension à la jonction commune de l'émetteur du transistor 2 et de la résistance 10 ne dépasse pas la tension de référence du comparateur 11. Il est à noter que pour un bon fonctionnement de la fonction de contrôle des comparateurs 12 et 13, la tension de référence appliquée au comparateur 11 doit être légèrement supérieure à la tension supérieure de référence appliquée au comparateur 12.

Dans le cas de la mise en service d'une lampe à filament comme charge, l'unité centrale 4 doit délivrer sur la ligne 5 une impulsion de commande de niveau haut d'une durée suffisante pour dépasser la zone de remise à zéro de la bascule 6 provoquée par le courant de pointe de commutation de la lampe susceptible de dépasser la tension supérieure de référence du comparateur 12, cette durée d'impulsion de commande étant bien entendu liée au type de lampe utilisée.

Lorsque la charge est de type selfique, comme cela est le cas en particulier pour une électrovanne, la durée de l'impulsion de commande produite par l'unité centrale 4 sur la ligne 5 doit être supérieure au temps nécessaire au courant circulant à travers l'électrovanne pour qu'il y dépasse la tension minimum de référence correspondante du comparateur 13 afin d'éviter une remise à zéro par son entrée R de la bascule 6 avant que les conditions normales de fonctionnement soient atteintes.

Le dispositif formant interface de l'invention permet donc d'optimiser l'unité centrale par la réduction sensible du nombre d'entrées/sorties puisque chaque dispositif est relié à une borne d'entrée/sortie d'unité centrale par une seule liaison filaire véhiculant les signaux de commande d'une charge et les signaux d'information de l'état de la charge et par une gestion simplifiée de la commande (commande par impulsion) et de la sécurité de fonctionnement (limitation automatique du courant et coupure automatique en cas de défaut).

Les circuits 9, 11-13 ont été réalisés à partir d'amplificateurs opérationnels mais il est bien entendu que des circuits à base par exemple de composants discrets peuvent être également utilisés pour accomplir les mêmes fonctions d'amplification et de comparaison sans sortir du cadre de la présente invention.

## Revendications

1. Dispositif électronique (1) formant interface bidirectionnelle de commande d'un élément de puissance (2) de commutation d'une charge (3) à partir d'une unité centrale de commande (4) telle que par exemple un microprocesseur, caractérisé en ce qu'il comprend un circuit logique (6) relié à une entrée et sortie de l'unité centrale (4) par une seule et unique liaison filaire (5) et comprenant une bascule bistable (6), dont une entrée de commande (S) est reliée à la liaison filaire (5) et mémorisant à sa sortie (Q) un signal de commande de conduction de l'élément de puissance (2) provenant de l'unité centrale (4) en mode sortie, le signal de sortie de la bascule (6) étant réappliqué à l'entrée de commande (S) de la bascule (6) pour informer l'unité centrale (4) en mode entrée du fonctionnement normal de la charge (3).

2. Dispositif selon la revendication 1, caractérisé en ce qu'il comprend de plus un circuit de contrôle (12 ; 13) des conditions de fonctionnement de la charge (3) produisant à une autre entrée de commande (R) de la bascule (6) précitée un signal forçant la sortie (Q) de la bascule à changer d'état lors d'une anomalie de fonctionnement de la charge (3) détectée par le circuit de contrôle.

3. Dispositif selon la revendication 2, caractérisé en ce que le circuit de contrôle précité comprend un premier comparateur (12) comparant la valeur de courant traversant la charge (3) à une valeur supérieure de référence et délivrant un signal de changement d'état précité lorsque la valeur du courant dans la charge (3) est supérieure à la valeur de référence.

4. Dispositif selon la revendication 2, caractérisé en ce que le circuit de contrôle précité comprend un second comparateur (13) comparant la valeur du courant traversant la charge (3) à une valeur inférieure de référence et délivrant le signal de changement d'état précité lorsque la valeur du courant dans la charge (3) est inférieure à la valeur de référence.

5. Dispositif selon les revendications 2 à 4, caractérisé en ce que les sorties des premier et second comparateurs (12 ; 13) sont reliées à l'entrée de commande (R) précitée de la bascule (6) par l'intermédiaire d'une porte logique OU (7).

6. Dispositif selon les revendications 2 à 5, caractérisé en ce que la bascule (6) précitée est du type (RS) dont les entrées (R) et (S) sont reliées respectivement à la sortie de la porte OU précitée et à la liaison filaire (5).

7. Dispositif selon l'une des revendications précédentes, caractérisé en ce qu'il comprend en outre un circuit (9 ; 11) de limitation automatique de courant dans l'élément de puissance (2) comprenant un amplificateur différentiel (9) dont une entrée est reliée à la liaison filaire (5) et un troisième comparateur (11) ayant sa sortie reliée à l'autre entrée de l'amplificateur différentiel (9) et comparant à ses deux entrées la valeur du courant circulant à travers l'élément de puissance (2) à une valeur supérieure de référence.

## Patentansprüche

1. Elektronische Vorrichtung (1), die eine Zweirichtungsschnittstelle für die Steuerung eines Leistungselementes (2) zur Umschaltung einer Last (3) von einer zentralen Steuerungseinheit (4), wie z.B. einem Mikroprozessor, aus bildet, dadurch gekennzeichnet, dass sie einen an einen Eingang und Ausgang der zentralen Einheit (4) durch eine einzige und alleinige Drahtverbindung (5) angeschlossenen logischen Schaltungskreis (6) aufweist, der einen bistabilen Multivibrator (6) umfasst, dessen einer Steuereingang (S) an die Drahtverbindung (5) angeschlossen ist und der an seinem Ausgang (Q) ein aus der zentrallen Einheit (4) in der Mode-Ausgang kommendes Signal zur Steuerung der Leitfähigkeit des Leistungselementes (2) speichert, wobei das Ausgangssignal des Multivibrators (6) wieder an den Steuereingang (S) des Multivibrators (2) angelegt wird, um die Zentraleinheit (4) in der Mode-Eingang über den normalen Betrieb der Last (3) zu benachrichtigen.

2. Vorrichtung nach Anspruch 1, dadurch gekennzeichnet, dass sie ausserdem einen Schaltungskreis (12 ;13) zur Kontrolle der Betriebsverhältnissen der Last (3) aufweist, welcher an einem anderen Steuereingang (R) des vorgenannten Multivibrators (6) ein Signal erzeugt, dass den Ausgang (Q) des Multivibrators zwingt, bei einer durch den Kontroleschalthreis aufgespürten Betriebsanomalie der Last (3), seinen Zustand zu ändern.

3. Vorrichtung nach Anspruch 2, dadurch gekennzeichnet, dass der vorgennante Kontroleschaltkreis einen ersten Vergleicher (12) aufweist, der den Wert des die Last (3) durchfliessenden Stromes mit einem höheren Bezugswert vergleicht und ein vorgennantes Zustandsänderungssignal abgibt, wenn der Wert des Stromes in der Last (3) höher als der Bezugswert ist.

4. Vorrichtung nach Anspruch 2, dadurch gekennzeichnet, dass der vorgennante Kontroleschaltkreis einen zweiten Vergleicher (13) umfasst, der den Wert des die Last (3) durchfliessenden Stromes mit einem niedrigeren Bezugswert vergleicht und das vorgennante Zustandsänderungssignal abgibt, wenn der Wert des Stromes in der Last (3) niedriger als der Bezugswert ist.

5. Vorrichtung nach den Ansprüchen 2 bis 4, dadurch gekennzeichnet, dass die Ausgänge des ersten und zweiten Vergleichers (12 ; 13) mit dem vorgennanten Steuereingang (R) des Multivibrators (6) über ein logisches ODER-Gatter (7) verbindet.

6. Vorrichtung nach den Ansprüchen 2 bis 5, dadurch gekennzeichnet, dass der vorgennante Multivibrator (6) der (RS)-Gattung ist, dessen Eingänge (R) und (S) jeweils an dem Ausgang des vorgennanten ODER-Gatters und and die Drahtverbindung (5) angeschlossen sind.

7. Vorrichtung nach einem der vorangehenden Ansprüche, dadurch gekennzeichnet, dass sie ausserdem einen Schaltkreis (9 ; 11) zur selbsttätigen Begrenzung des Stromes in dem Leistungselement (2) aufweist, mit einem Differentialverstärker (9), dessen einer Eingang an die Drahtverbindung (5) angeschlossen ist und einem dritten Vergleicher (11) dessen Ausgang mit dem anderen Eingang des Differentialverstärkers (9) verbunden ist und der an seinen beiden Eingängen den Wert des durch das Leistungselement (2) fliessenden Stromes mit einem höheren Bezugswert vergleicht.

## Claims

1. Electronic device (1) forming a bidirectional interface for the control of a power element (2) for the switching of a load (3) from a central control unit (4) such for instance as a microprocessor, characterized in that it comprises a logic circuit (6) connected to an input and an output of the central unit (4) by one single and sole wire connection (5) and comprising a bistable multivibrato : (6) one control input (S) of which is connected to the wire connection (5) and storing at its output (Q) a signal for controlling the conduction of the power element (2), coming from the central unit (4) in the ouput mode, the output signal from the multivibrator (6) being re-applied to the control input (S) of the multivibrator (6) to advise the central unit (4) in the input mode of the normal operation of the load (3).

2. Device according to claim 1, characterized in that it further comprises a circuit (12 ;13) for controlling the operating conditions of the load (3) producing at another control input (R) of the aforesaid multivibrator (6) a signal forcing the output (Q) of the multivibrator to change its state upon an anomaly of operation of tie load (3) detected by the control circuit.

3. Device according to claim 2, characterized in that the aforesaid control circuit comprises a first comparator (12) comparing the value of the current flowing through the load (3) with a higher reference value and delivering an aforesaid state change signal when the value of the current in the load (3) is higher than the reference value.

4. Device according to claim 2, characterized in that the aforesaid control circuit comprises a second comparator (13) comparing the value of the current flowing through the load (3) to a lower reference value and delivering the aforesaid state change signal when the value of the current in the load (3) is lower than the reference value.

5. Device according to claims 2 to 4, characterized in that the outputs of the first and second comparators (12 ; 13) are connected to the aforesaid control input (R) of the multivibrator (6) through the medium of a logic OR-gate (7).

6. Device according to claims 2 to 5, characterized in that the aforesaid multivibrator (6) is of the (RS) type the inputs (R) and (S) of which are connected to the output of the aforesaid OR-gate and to the wird connection (5), respectively.

7. Device according to one of the foregoing claims, characterized in that it moreover comprises a circuit (9 ; 11) for the automatic limitation of the current in the power element (2) comprising a differential amplifier (9) one input of which is connected to the wire connection (5) and a third comparator (11) having its ouptut connected to the other input of the differential amplifier (9) and comparing at its two inputs the value of the current circulating through the power element (2) to a higher reference value.